# EUROPÄISCHE PATENTSCHRIFT

(11) **EP 2 282 869 B1**
(45) Veröffentlichungstag und Bekanntmachung des Hinweises auf die Patenterteilung: **25.04.2012**
(21) Anmeldenummer: 09737892.1
(22) Anmeldetag: 30.04.2009
(51) Int. Cl.: B23Q 16/06

(54) **VORRICHTUNG ZUR WERKSTÜCKPOSITIONIERUNG**
DEVICE FOR WORKPIECE POSITIONING
DISPOSITIF DE POSITIONNEMENT DE PIÈCE

(30) Priorität: 30.04.2008 DE 102008021653; 24.10.2008 DE 102008053163
(43) Veröffentlichungstag der Anmeldung: 16.02.2011
(73) Patentinhaber: ThyssenKrupp Drauz Nothelfer GmbH, 74076 Heilbronn (DE)
(72) Erfinder: KIPPING, Josef, 66839 Schmelz (DE)
(74) Vertreter: Kirchner, Sven
(86) Internationale Anmeldenummer: PCT/EP2009/003128
(87) Internationale Veröffentlichungsnummer: WO 2009/132848

(56) Entgegenhaltungen:
- GB-A- 1 508 801
- JP-A- 63 283 844
- US-A- 2 949 049

## Beschreibung

Die Erfindung bezieht sich auf eine Vorrichtung zur Werkstückpositionierung gemäß Oberbegriff des Anspruchs 1.

Derartige Vorrichtungen werden vorzugsweise in der Automobilindustrie eingesetzt, um auf einem Drehtisch positionierte Werkstücke in verschiedene Bearbeitungspositionen zu bringen. Ziel ist es dabei insbesondere, dass das Werkstück für die Bearbeitung in eine verriegelte Endposition gebracht wird. Bei einer Drehung des Drehtisches um genau 180° kann das Werkstück mit ein und demselben Werkzeug nacheinander von der Vor- und Rückseite bearbeitet werden. Es kann aber auch durch die Drehung des Drehtisches um 180° oder weniger als Werkstück aus einer Übernahmeposition in einer Bearbeitungsposition und wieder zurück geschwenkt werden.

Eine Vorrichtung zur Verdrehung eines Drehtisches um 180° ist beispielsweise aus der JP 63 283844 A bekannt. Diese Druckschrift beschreibt einen Drehtisch zur Werkstückpositionierung, wobei über eine zweiteilige, abwinkelbare Antriebsstange eines Linearantriebs eine in einer Kulisse eines Führungselementes (guideboard) geführte und mit einer Nockenbahn zusammenwirkende Rolle angetrieben wird und hierdurch das Führungselement und der hiermit gekoppelte Drehtisch verdreht werden.

Aus der DE 36 16 466 A2 ist eine Vorrichtung zur Werkstückpositionierung bekannt, wobei ein drehbar gelagerter Drehschalttisch mit einer Antriebseinheit verbunden ist, um den Drehtisch schrittweise zu drehen bzw. weiterzutakten. Die Antriebseinheit besteht dabei aus einem als Schwenkkolbenmotor ausgebildeten Pneumatikmotor, der schrittweise den Drehschalttisch über einen am äußeren Umfang angreifenden Betätigungsarm in nur einer Drehrichtung weiterbewegt.

In der DE 33 36 459 C2 wird eine Schaltvorrichtung zum Weiterschalten und mechanischen Verriegeln einer schrittweise angetriebenen Teileinrichtung beschrieben, bei dem eine Drehscheibe jeweils um 60° weitergedreht wird. Eine genaue Arretierung der Scheibe in der jeweiligen Bearbeitungsstelle ist dabei nicht vorgesehen.

Bei der DE 197 45 023 C2 wird der Drehtisch über eine fluidbetätigte Zahnstange bewegt. Hierbei wird eine Drehung erreicht, indem die Zahnstange vom Drehtisch wegbewegt und zurückgezogen wird und danach für einen weiteren Drehvorgang mit dem Drehtisch in Eingriff gebracht wird. Auch hierbei ist eine zusätzliche Arretierung der Drehscheibe notwendig.

In der EP 1 529 595 A2 wird ein Antrieb über ein Schneckengetriebe vorgesehen, wobei eine Arretierung nur bei Stillstand des Getriebes gegeben ist. Die Drehung der Schnecke erfolgt über einen Motor, wobei ein ruckfreies Anfahren bzw. Abbremsen der Drehung nur durch eine zusätzliche Antriebssteuerung des Motors erreicht werden kann.

Der Erfindung liegt die Aufgabe zu Grunde, eine Vorrichtung der gattungsgemäßen Art vorzuschlagen, bei der mit einem einfachen Linearantrieb ein Schwenken des Drehtisches zwischen zwei mechanisch verriegelten Positionen ohne Verwendung von zusätzlichen Verriegelungseinrichtungen erreicht wird.

Die Lösung dieser Aufgabe ist im Patentanspruch 1 oder 2 angegeben. Die Unteransprüche 3 - 10 enthalten sinnvolle Ausführungsformen dazu.

Erfindungsgemäß ist vorgesehen, dass die Vorrichtung zur Werkstückpositionierung mit einem drehbar gelagerten Drehtisch einen Linearantrieb besitzt, mit dem der Drehtisch um seine Drehachse zwischen vorzugsweise zwei verriegelbaren Endpositionen schwenkbar ist. Für den Linearantrieb wird dabei insbesondere ein pneumatischer Zylinder oder eine in sonstiger Weise wirkende Antriebseinrichtung verwendet. Wichtig ist dabei, dass die Antriebseinheit zwischen zwei Endpositionen hin und her bewegbar ist und dass auf komplizierte elektrische Antriebe und Motorsteuerungen verzichtet werden kann.

Weiterhin ist vorgesehen, dass der Linearantrieb gelenkig an einem Ende eines um eine etwa mittige Drehachse schwenkbaren Antriebshebels angreift, der an seinem anderen Ende mit einer Kurvenrolle verbunden ist, die in einer Kulissenführung bewegbar ist, wobei die Kulissenführung entweder direkt am Drehtisch (vgl. Anspruch 1) oder an einem ersten Rad angeordnet ist (vgl. Anspruch 2) und dort in radialer Richtung verläuft, wobei das erste Rad an seinem Umfang auf dem Umfang eines zweiten Rades abrollt, dessen Durchmesser vorzugsweise kleiner oder gleich dem des ersten Rades ist und dass das zweite Rad fest mit dem Drehtisch verbunden ist und mit diesem um eine gemeinsame Drehachse schwenkbar ist.

Bei einem Außendurchmesserverhältnis der beiden Räder von zwei zu eins führt erfindungsgemäß das erste Rad z. B. eine Drehung von 90° und das zweite Rad mit dem zugehörigen Drehtisch eine Drehbewegung um genau 180° zwangsläufig aus. In den beiden Endpositionen ist der Antriebshebel jeweils im rechten Winkel zur Längsrichtung der Kulissenführung angeordnet, sodass eine Drehbewegung des ersten Rades nicht mehr möglich ist und das System in diesen beiden Endstellungen automatisch mechanisch verriegelt ist.

Es hat sich außerdem gezeigt, dass die Drehbewegung der Räder bei einer gleichmäßigen Linearbewegung des Linearantriebes einen sinusartigen Verlauf besitzt. Dadurch kann insbesondere zu Beginn und am Ende des Drehvorganges eine ruckartige Bewegung vermieden werden.

Durch die Anordnung der gesamten Vorrichtung auf einer gemeinsamen Grundplatte kann eine kompakte Bauweise mit insgesamt niedriger Bauhöhe verwirklicht werden.

Die Erfindung wird anhand der beigefügten Figuren 1 - 6 beispielsweise näher erläutert.

Es zeigen
- Fig. 1: in schematischer Darstellung eine Draufsicht der erfindungsgemäßen Vorrichtung,
- Fig. 2: eine Draufsicht auf die erfindungsgemäße Vorrichtung nach Fig. 1 wobei der Kolben 7a in der ausgefahrenen Position ist,
- Fig. 3: eine Darstellung entsprechend Fig. 2 mit eingefahrener Position des Kolbens 7a,
- Fig. 4: eine perspektivische Darstellung der Vorrichtung in der Position nach Fig. 2,
- Fig. 5: eine perspektivische Darstellung der Vorrichtung in der Position nach Fig. 3 und
- Fig. 6: eine schematische Draufsicht auf eine andere Ausführungsform der erfindungsgemäßen Vorrichtung.

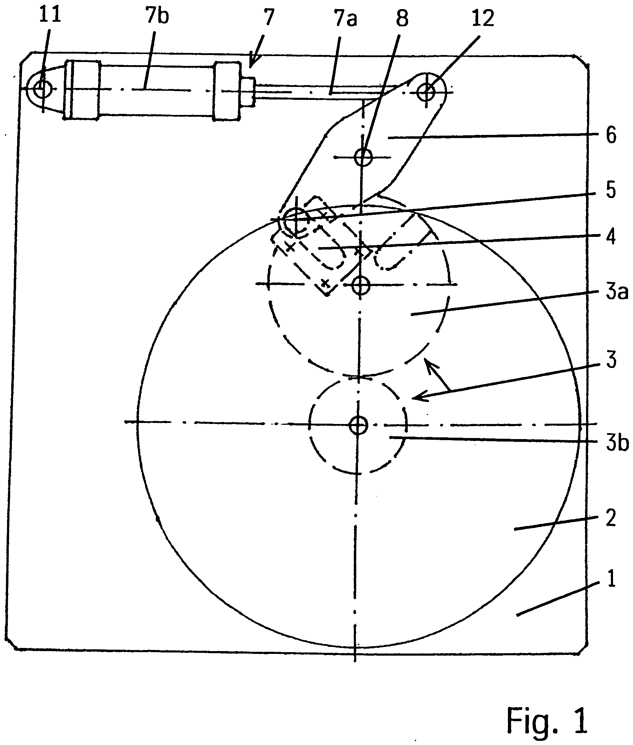

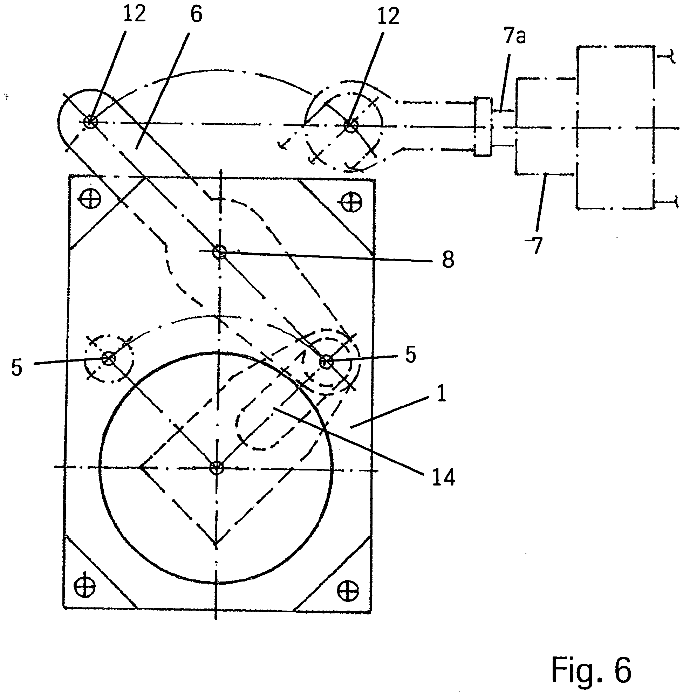

Die erfindungsgemäße Vorrichtung ist jeweils auf einer ebenen Grundplatte 1 positioniert, die an beliebiger Stelle im Werk auf dem Boden oder vor der jeweiligen Bearbeitungsmaschine fest verschraubt werden kann. Auf dieser Grundplatte 1 ist mittig mit einer senkrechten Drehachse der Drehtisch 2, 20 positioniert. Nach Fig. 6 besitzt der Drehtisch 20 die Kulissenführung 14 für die Kurvenrolle 5 des Antriebshebels 6. Nach Figuren 1 - 6 ist der Drehtisch 2 fest mit dem Rad 3b verbunden, wobei Drehtisch 2 und Rad 3b ein und dieselbe Drehasche besitzen. Achsparallel zu dem Rad 3b ist ein zweites Rad 3a angeordnet, wobei die beiden Räder 3a, 3b an ihren Umfängen aufeinander abrollen und dadurch ein Übersetzungsgetriebe 3 bilden. Die Räder 3a, 3b können aus üblichen Zahnrädern bestehen. Die Übertragung kann aber auch über Zahnriemen oder Zahnketten oder Ähnliches erfolgen. Die beiden Räder 3a, 3b besitzen unterschiedliche Durchmesser, wobei sich aus dem Verhältnis der Durchmesser das Übersetzungsverhältnis ergibt. Bei einem Übersetzungsverhältnis von zwei zu eins ist der Durchmesser des ersten Rades 3a doppelt so groß wie der Durchmesser des zweiten Rades 3b. Dieses Durchmesserverhältnis von zwei zu eins bedeutet, dass z. B. bei einer Drehung des ersten Rades 3a um 90°, das zweite Rad 3b eine Drehung um 180° ausführt.

Um ein mögliches Flankenspiel zwischen den Zahnrädern 3a und 3b zu beseitigen, kann es sinnvoll sein, das Übersetzungsverhältnis geringfügig über das Verhältnis 2:1 hinaus auszuführen. Dadurch wäre der Drehwinkel des Drehtisches 2 größer als 180°, was jedoch durch einen Anschlag am Drehtisch 2 verhindert wird. Daraus ergibt sich im Flankeneingriff zwischen den beiden Zahnrädern 3a und 3b eine Druckspannung, welche das Flankenspiel eliminiert. Die Verriegelung des ersten Rades 3a durch die oben beschriebene Kniehebelposition wird hierdurch nicht beeinträchtigt. Das gleiche Prinzip kann natürlich auch bei der Verwendung eines Zahnriemens, einer Zahnkette oder Ähnlichem angewendet werden.

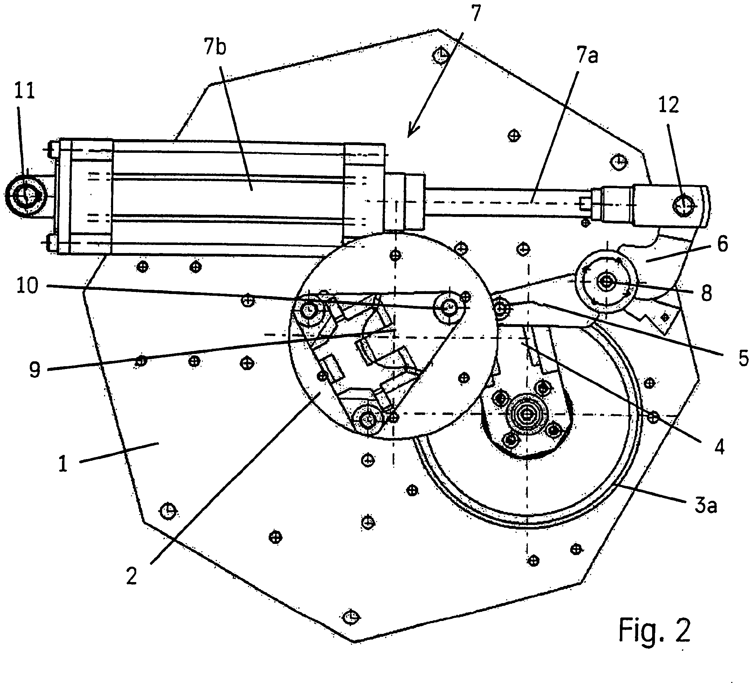

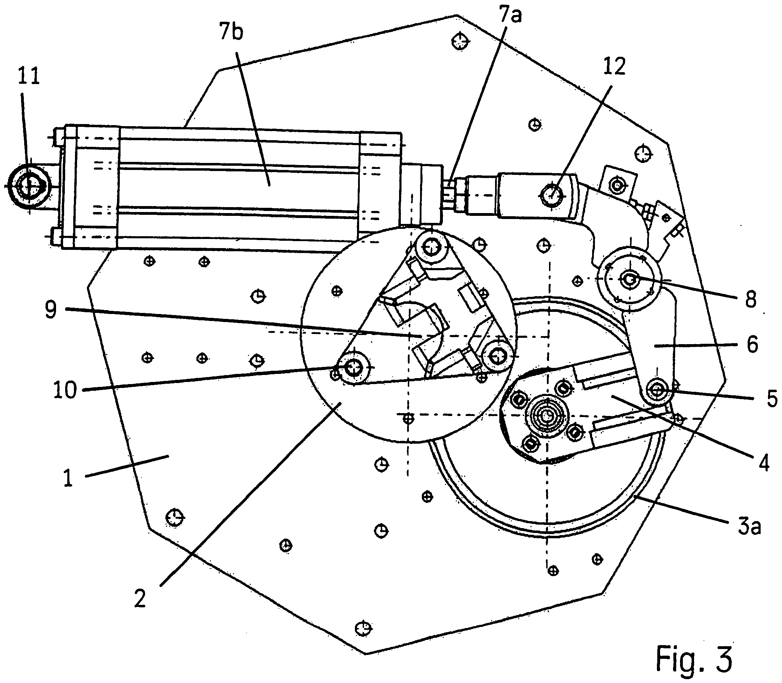

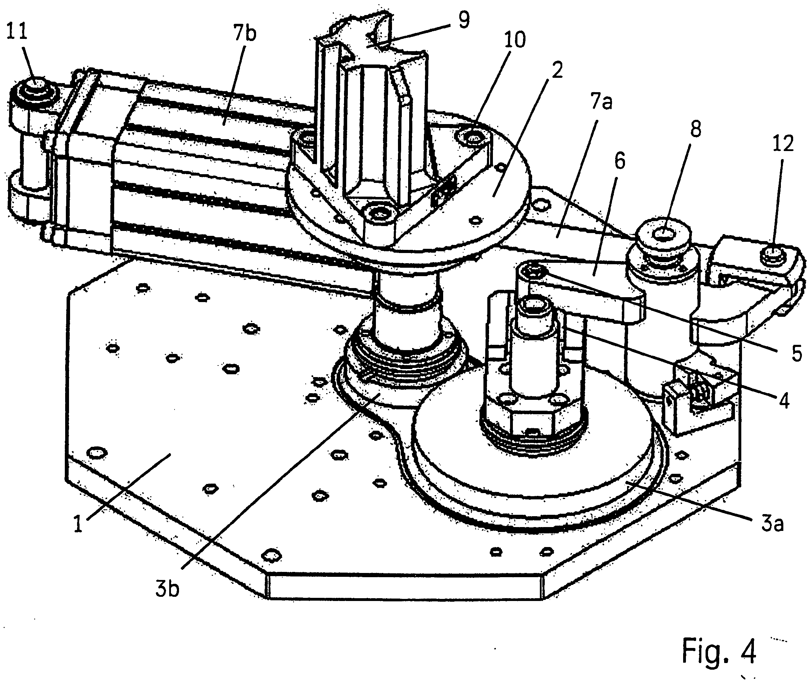

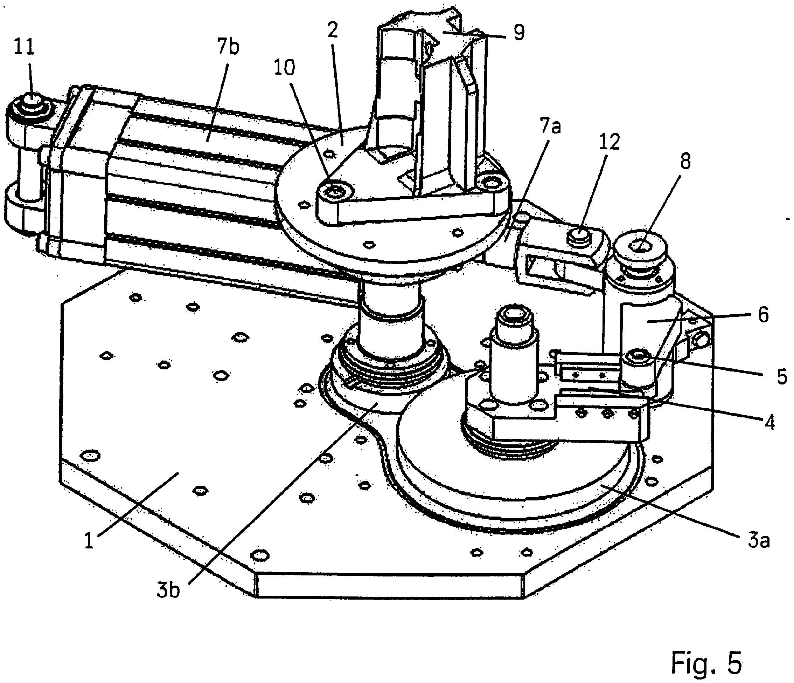

Das erste Rad 3a wird mit Hilfe des Linearantriebes 7 angetrieben. Dieser besteht im vorliegenden Fall aus dem Zylinder 7b und der Kolbenstange 7a. Das eine Ende des Linearantriebes 7 ist über das Gelenk 11 fest auf der Grundplatte 1 oder in sonstiger Weise stationär befestigt. Das Ende der Kolbenstange 7a ist über das Gelenk 12 mit dem Antriebshebel 6 verbunden, der etwa mittig eine Drehachse 8 besitzt, die ebenfalls fest mit der Grundplatte 1 verbunden ist. Das andere Ende des Antriebshebels 6 besitzt eine Kurvenrolle 5, die in einer Kulissenführung 4 beweglich angeordnet ist. Die Kulissenführung 4 ist mit dem ersten Rad 3a verbunden und verläuft in radialer Richtung dieses Rades 3a. Im Hinblick auf eine gute Kraftübertragung ist der Schlitz der Kulissenführung 4 möglichst weit außen am Umfang des Rades 3a angeordnet. In Fig. 1 und 6 sind zwei bevorzugte Endstellungen der Kulissenführung 4 bzw. 14 in strichpunktierter Linie dargestellt, wobei diese beiden Stellungen in Figuren 1 und 6 um 90° zueinander verdreht sind. In diesen beiden Endstellungen ist die Längsachse des Antriebshebels 6 rechtwinklig zur Längsachse der Kulissenführung 4 angeordnet. Hierdurch ergibt sich zwangsweise eine Arretierung des Rades 3a und damit auch des Rades 3b sowie des Drehtisches 2 in diesen beiden Endpositionen. Die Drehung des Rades 3a um 90° bedeutet, dass bei dem dargestellten Übersetzungsverhältnis zwei zu eins sich das Rad 3b und damit auch der Drehtisch 2 um genau 180° dreht. Das bedeutet, dass die auf dem Drehtisch 2 andeutungsweise dargestellte Spannkonsole 9 und ein nicht dargestelltes Werkstück um 180° gedreht werden. Deutlich wird dieses dadurch, dass in den Fig. 2 und 4 der Befestigungspunkt 10 für die Spannkonsole 9 auf der rechten Seite und in den Fig. 3 und 5 auf der linken Seite angeordnet ist. Durch diese Drehung um 180° kann mit ein und demselben Bearbeitungswerkzeug ein Werkstück nacheinander an den beiden gegenüberliegenden Seiten bearbeitet werden.

### Bezugszeichenliste

- 1: Grundplatte
- 2: Drehtisch
- 3: Übersetzungsgetriebe
- 3a: erstes Rad (groß, von 3)
- 3b: zweites Rad (klein, von 3)
- 4: Kulissenführung (an 3a für 5, radial verlaufend)
- 5: Kurvenrolle
- 6: Antriebshebel
- 7: Linearantrieb (pneumatischer Zylinder)
- 7a: Kolbenstange (von 7)
- 7b: Zylinder (von 7)
- 8: Drehachse (von 6)
- 9: Spannkonsole (auf 2)
- 10: Befestigungspunkt (für 9 auf 2)
- 11: Gelenk (an 7)
- 12: Gelenk (an 7a, 6)
- 14: Kulissenführung (für 5, an 20, radial)
- 20: Drehtisch

## Patentansprüche

1. Vorrichtung zur Werkstückpositionierung mit einem drehbar gelagerten Drehtisch (2, 20), an dem mindestens ein Werkstück oder eine Spannkonsole (9) für ein Werkstück lösbar befestigbar ist und mit einer einen Linearantrieb (7) enthaltenden Antriebseinheit, mit der der Drehtisch (2, 20) um seine Drehachse zwischen vorzugsweise zwei verriegelbaren Endpositionen schwenkbar ist, **dadurch gekennzeichnet, dass** der Linearantrieb (7) gelenkig an einem Ende eines um eine etwa mittige Drehachse (8) schwenkbaren Antriebshebels (6) angreift, der an seinem anderen Ende mit einer Kurvenrolle (5) verbunden ist, die in einer Kulissenführung (4, 14) bewegbar ist, wobei die Kulissenführung (4, 14) an einem Rad (3a) das den Drehtisch (2) antreibt, oder direkt an dem Drehtisch (20) angeordnet ist, dort jeweils in radialer Richtung verläuft und der Drehtisch (2, 20) bei Betätigung des Linearantriebes (7) um seine Drehachse schwenkbar ist.

2. Vorrichtung nach Anspruch 1, **dadurch gekennzeichnet, dass** die Kulissenführung (4) an einem ersten Rad (3a) angeordnet ist und dort in radialer Richtung verläuft, dass das erste Rad (3a) an seinem Umfang auf dem Umfang eines zweiten Rades (3b) abrollt und dass das zweite Rad (3b) fest mit dem Drehtisch (2) verbunden ist und mit diesem um eine gemeinsame Drehachse schwenkbar ist.

3. Vorrichtung nach Anspruch 1 oder 2, **dadurch gekennzeichnet, dass** der Linearantrieb (7) aus einem pneumatischen Zylinder oder einem ähnlichen Antrieb besteht.

4. Vorrichtung nach Anspruch 2, **dadurch gekennzeichnet, dass** der Durchmesser des ersten Rades (3a) höchstens doppelt so groß ist wie der Durchmesser des zweiten Rades (3b).

5. Vorrichtung nach Anspruch 1 oder 2, **dadurch gekennzeichnet, dass** der Drehwinkel des Drehtisches (2) maximal 180° beträgt.

6. Vorrichtung nach Anspruch 2, **dadurch gekennzeichnet, dass** das erste Rad einen Drehwinkel von 90° und das zweite Rad von 180° besitzt.

7. Vorrichtung nach Anspruch 2, **dadurch gekennzeichnet, dass** die Räder (3a, 3b) mit Zahnrädern, Zahnriemen oder ähnlichen schlupflosen Übertragungseinrichtungen verbunden sind.

8. Vorrichtung nach Anspruch 2, **dadurch gekennzeichnet, dass** das Übersetzungsverhältnis der beiden Räder (3a, 3b) frei wählbar ist.

9. Vorrichtung nach Anspruch 2, **dadurch gekennzeichnet, dass** Linearantrieb (7), Antriebshebel (6), erstes Rad (3a), zweites Rad (3b) und Drehtisch (2) im Bereich ihrer jeweiligen Drehachsen auf einer gemeinsamen Grundplatte (1) gelagert sind.

10. Vorrichtung nach Anspruch 2, **dadurch gekennzeichnet, dass** der Durchmesser des zweiten Rades (3b) kleiner oder gleich dem des ersten Rades (3a) ist.

## Claims

1. Device for workpiece positioning having a rotatably mounted turntable (2, 20) to which at least one workpiece or a clamping bracket (9) for a workpiece can be releasably attached, and having a drive unit which contains a linear drive (7) and by means of which the turntable (2, 20) can pivot about its axis of rotation between preferably two lockable end positions, **characterised in that** the linear drive (7) engages in an articulated manner on one end of a drive lever (6) which is able to pivot about an approximately central axis of rotation (8) and which at its other end is connected to a cam roller (5) which is able to move in a crank guide (4, 14), wherein the crank guide (4, 14) is disposed on a wheel (3 a) which drives the turntable (2), or is disposed directly on the turntable (20), extends in the respective radial direction at that location, and the turntable (2, 20) is able to pivot about its axis of rotation when the linear drive (7) is actuated.

2. Device as claimed in claim 1, **characterised in that** the crank guide (4) is disposed on a first wheel (3a) and at that location extends in the radial direction, that the first wheel (3a) rolls at its periphery on the periphery of a second wheel (3b) and that the second wheel (3b) is fixedly connected to the turntable (2) and is able to pivot therewith about a common axis of rotation.

3. Device as claimed in claim 1 or 2, **characterised in that** the linear drive (7) consists of a pneumatic cylinder or a similar drive.

4. Device as claimed in claim 2, **characterised in that** the diameter of the first wheel (3a) is at most twice as large as the diameter of the second wheel (3b).

5. Device as claimed in claim 1 or 2, **characterised in that** the rotary angle of the turntable (2) is a maximum of 180°.

6. Device as claimed in claim 2, **characterised in that** the first wheel has a rotary angle of 90° and the second wheel has a rotary angle of 180°.

7. Device as claimed in claim 2, **characterised in that** the wheels (3a, 3b) are connected to toothed wheels, toothed belts or similar slippage-free transmission devices.

8. Device as claimed in claim 2, **characterised in that** the transmission ratio of the two wheels (3a, 3b) can be selected at will.

9. Device as claimed in claim 2, **characterised in that** the linear drive (7), drive lever (6), first wheel (3a), second wheel (3b) and turntable (2) are mounted, in the region of their respective axes of rotation, on a common base plate (1).

10. Device as claimed in claim 2, **characterised in that** the diameter of the second wheel (3b) is smaller than or equal to that of the first wheel (3a).

## Revendications

1. Dispositif de positionnement de pièces à usiner, qui est doté d'une table tournante (2, 20) montée en rotation, sur laquelle au moins une pièce à usiner ou une console de serrage (9) pour une pièce à usiner peut être fixée de manière amovible, et d'une unité de commande avec un dispositif d'entraînement linéaire (7), au moyen de laquelle le table tournante (2, 20) peut être pivotée autour de son axe de rotation, entre des positions finales, qui, de préférence au nombre de deux, peuvent être verrouillées, **caractérisé en ce que** le dispositif d'entraînement linéaire (7) coopère, articulé, avec une extrémité d'un levier de commande (6), qui, pivotant autour d'un axe de rotation (8) approximativement central, est relié, à son autre extrémité, à un galet de came (5), qui peut être déplacé dans un guide à coulisse (4, 14), sachant que le guide à coulisse (4, 14) est agencé sur une roue (3a), qui entraîne la table tournante (2), ou directement sur la table tournante (20), et, de là, s'étend dans la direction radiale, et que la table tournante (2, 20) peut pivoter autour de son axe de rotation, lors de l'actionnement du dispositif d'entraînement linéaire (7).

2. Dispositif selon la revendication 1, **caractérisé en ce que** le guide à coulisse (4) est agencé sur une première roue (3a) et s'étend, de là, dans la direction radiale, que la première roue (3a), roule avec sa périphérie sur la périphérie d'une deuxième roue (3b), et que la deuxième roue (3b) est reliée fixement à la table tournante (2) et peut être pivotée, avec celle-ci, autour d'un axe de rotation commun.

3. Dispositif selon revendication 1 ou 2, **caractérisé en ce que** le dispositif d'entraînement linéaire (7) consiste en un cylindre pneumatique ou un entraînement similaire.

4. Dispositif selon la revendication 2, **caractérisé en ce que** le diamètre de la première roue (3a) est, au plus, le double du diamètre de la deuxième roue (3b).

5. Dispositif selon revendication 1 ou 2, **caractérisé en ce que** l'angle de rotation de la table tournante (2) est de 180° au maximum.

6. Dispositif selon la revendication 2, **caractérisé en ce que** l'angle de rotation de la première roue est de 90 ° et que celui de la deuxième roue est de 180 °.

7. Dispositif selon la revendication 2, **caractérisé en ce que** les roues (3a, 3b) sont reliées à des roues dentées, des courroies crantées ou des dispositifs de transmission sans glissement similaires.

8. Dispositif selon la revendication 2, **caractérisé en ce que** le rapport de transmission des deux roues (3a, 3b) peut être sélectionné librement.

9. Dispositif selon la revendication 2, **caractérisé en ce que** le dispositif d'entraînement linéaire (7), le levier de commande (6), la première roue (3a), la deuxième roue (3b) et la table tournante (2) sont montés sur une plaque de base commune (1).

10. Dispositif selon la revendication 2, **caractérisé en ce que** le diamètre de la deuxième roue (3b) est inférieur ou égal à celui de la première roue (3a).
